# EUROPEAN PATENT APPLICATION

(11) **EP 4 552 900 A1**
(43) Date of publication of application: **14.05.2025**
(21) Application number: 24209635.2
(22) Date of filing: 29.10.2024
(51) Int. Cl.: B60L 5/00, B60L 50/40, B60L 53/14, B60L 53/55, B60L 53/62, B60L 53/63, B60L 53/64, B60L 53/65, B60L 55/00

(54) **A SUPER-CAPACITOR BASED ELECTRIC VEHICLE CHARGING SYSTEM**

(30) Priority: 09.11.2023 DE 102023131179
(71) Applicant: Skeleton Technologies GmbH, 04420 Markranstädt (DE)
(72) Inventor: Sinijärv, Tanel, 01900 c/o Skeleton Technologies GmbH; Großröhrsdorf (DE); Pääro, Fred-Georg, 01900 c/o Skelteon Technologies GmbH; Großröhrsdorf (DE); Saar, Mihkel, 01900 c/o Sketeton Technologies GmbH; Großröhrsdorf (DE)
(74) Representative: KASTEL Patentanwälte PartG mbB

(57) **Abstract**

Disclosed is a supercapacitor-based electric vehicle charging system to manipulate power supply from an AC grid to an electric vehicle having a supercapacitor energy storage unit. The supercapacitor-based electric vehicle includes a grid converter, a charging station, and a charger converter. The grid converter receives power supply to convert into DC power. The charging station includes supercapacitors to receive the DC power from the grid converter. Further, the charging station stores the DC power. The charger converter manages the DC power flow to the supercapacitor energy storage unit of the electric vehicle. The charger converter operates at a same voltage value between the AC grid to the supercapacitor energy storage unit to achieve a conversion efficiency of greater than or equal to 90%.

## Description

### ACKNOWLEDGEMENT

This invention and the present patent application were funded by Enterprise Estonia - EAS within the project No. 2014-2020.4.02.21-0354 - "Ultracapacitor Opprtunity Charging".

### BACKGROUND OF THE INVENTION

### Field of the Invention

The present application generally relates to an EV charging station, and more particularly relates to a supercapacitor-based electric vehicle charging system for maintaining at least 90% charging efficiency.

### Description of Related Art

The world needs to reduce carbon and other greenhouse gas emissions by 50% in important industries by 2030, and by 100% by 2050. One reason for this change is that more vehicles are now being powered by electricity instead of gasoline. However, the speed at which this change is occurring is being hindered by challenges in technology, environmental hazards and supply chain.

During battery charging, energy is used to move the lithium ions back to the high-energy anode compound. The charge and discharge process in batteries is a slow process, and can degrade the chemical compounds inside the battery over time. Further, rapid charging causes accelerated degradation of the battery constituents, as well as a potential fire hazard due to a localized, over-potential build-up and increased heat generation.

Batteries have a low power density, and lose their ability to retain energy due to material degradation. Whereas, electrochemical double-layer capacitors (EDLCs) or ultracapacitors are, together with pseudocapacitors, part of a new type of electrochemical capacitors called supercapacitors, which store energy through accumulation of ions on an electrode surface, have limited energy storage capacity, but very high power density. Supercapacitors can be charged quickly, leading to a very high power density, and do not lose their storage capabilities over time.

In short transit application like mining, shipyards, factory campus, university campus etc., there is a requirement of rapid charging infrastructure which quickly charges the vehicles. Further, the vehicle needs to run only for short duration with not more than few kilometers. Many vehicles are now equipped with supercapacitors to receive fast charging.

However, there are limited systems and methods are known to provide an infrastructure to manage fast charging and discharging of the power from AC grids to the electrical vehicle. Therefore, there is a need of a supercapacitor-based electric vehicle charging system to manipulate power supply from the AC grid to a supercapacitor based electric vehicle. Further, the supercapacitor-based electric vehicle charging system should include a programmable logic control (PLC) unit to control delivery of power from the AC grid to the electric vehicle.

### SUMMARY OF THE INVENTION

It is the object of the invention to improve fast charging of electric vehicles.

The object is achieved by the subject-matter of the independent claims. Preferred embodiments are subject-matter of the dependent claims.

In accordance with teachings of the present invention, a supercapacitor-based electric vehicle charging system to manipulate power supply from an AC grid to a supercapacitor energy storage unit of an electric vehicle is provided.

An idea of the present invention is to provide the supercapacitor-based electric vehicle charging system including a grid converter, a charging station and a charger converter. The grid converter receives power supply to convert into DC power. The charging station includes supercapacitors to receive the DC power from the grid converter. Further, the charging station stores the DC power.

Further, the charger converter manages the DC power flow to the supercapacitor energy storage unit. The charger converter operates at same voltage value between the AC grid to the supercapacitor energy storage unit to achieve a conversion efficiency of greater than or equal to 90%.

Another idea of the present invention is to provide the supercapacitor-based electric vehicle charging system with a programmable logic control (PLC) unit to control the charger converter and the grid converter. Further, the PLC unit monitors load on the AC grid, and controls the grid converter to receive power supply at off-peak hours to shed load of the AC grid.

Another idea of the present invention is to provide supercapacitor-based electric vehicle charging system includes a wireless communication unit to communicate electrical parameters of the supercapacitor energy storage unit to the charger converter via the PLC unit. Further, the PLC unit monitors the supercapacitor charging station.

Another idea of the present invention is to provide an interface unit to transfer the DC power from the charger converter to the supercapacitor energy storage unit via the PLC unit. Further, the interface unit is a Pantograph.

Another idea of the present invention is to provide a plurality of protection blocks, characterized in that a first protection block is positioned between the AC grid and the grid converter, and a second protection block is positioned between the grid buffer, the grid converter and the charger converter. Further, the protection blocks include a third protection block positioned between the charger converter and the interface unit. The protection blocks include at least one of a residual circuit monitor, a circuit breaker, a fuse and a main switch.

Another idea of the present invention is to provide the supercapacitors of the charging station in a multiple series and/or parallel combinations of low internal resistors supercapacitor modules. Further, the charging station operates at a temperature range between 45°C to 120°C.

Another idea of the present invention is to provide the PLC unit to control the attachment of the interface unit with the supercapacitor energy storage unit. Further, the charger converter delivers a minimum charge range of 7km in a charge time of 30 seconds.

These and other features and advantages will become apparent from the following detailed description of illustrative embodiments thereof, which is to be read in connection with the accompanying drawings.

### BRIEF DESCRIPTION OF DRAWINGS

The description below provides detailed information on a supercapacitor-based electric vehicle charging system according to the invention. The invention should not be viewed to be limited to the specific descriptions of the embodiments in this paragraph. The detailed description is accompanied with drawings where, in which:
FIG. 1 illustrates a block diagram of a supercapacitor-based electric vehicle charging system in accordance with an embodiment of the present invention; and
FIG. 2 illustrates a perspective view of an interface unit connected to an electric vehicle in accordance with an exemplary embodiment of the present invention.

### DETAILED DESCRIPTION OF DRAWINGS

While this technology is illustrated and described in a preferred embodiment, a supercapacitor-based electric vehicle charging system to manipulate power supply from an AC grid to an electric vehicle may be produced in many different shapes, sizes, materials, forms and configurations. This is depicted in the drawings, and will herein be described in detail, as a preferred embodiment of the invention, with the understanding that the present disclosure is to be considered as an exemplification of the principles of the invention and the associated functional specifications for its construction and is not intended to limit the invention to the embodiment illustrated. Those skilled in the art will envision many other possible variations within the scope of the technology described herein.

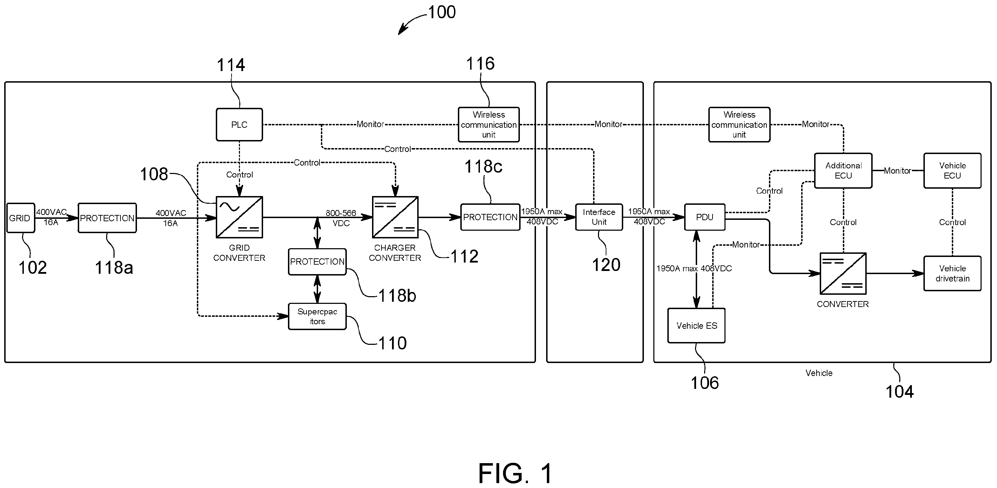

FIG. 1 illustrates a block diagram of a supercapacitor-based electric vehicle charging system 100 in accordance with an embodiment of the present invention. The supercapacitor-based electric vehicle charging system 100 manipulates power supply from an AC grid 102 to an electric vehicle 104 having a supercapacitor energy storage unit 106. The supercapacitor-based electric vehicle charging system 100 includes a grid converter 108, a charging station 110, and a charger converter 112.

The grid converter 108 receives power supply to convert into DC power. The charging station 110 includes supercapacitors to receive the DC power from the grid converter 108. Further, the charging station 110 stores the DC power. The charger converter 112 manages the DC power flow to the supercapacitor energy storage unit 106 of the electric vehicle 104. The charger converter 112 operates at a same voltage value between the AC grid 102 to the supercapacitor energy storage unit 106 to achieve a conversion efficiency of greater than or equal to 90%.

In an embodiment, the supercapacitors of the charging station 110 is made up of multiple series and/or parallel combinations of low internal resistors supercapacitor modules to achieve 400V. The charging station 110 operates at a temperature range between -45°C to 120°C. Further in an embodiment, the charger converter 112 delivers a minimum charge range of 7km in a charge time of 30 seconds. However, it would be readily apparent to those skilled in the art that a minimum charge range may be increased in an increased or same charged time, without deviating from the scope of the present invention.

In an embodiment, the grid converter 108 and the charger converter 112 are mono-directional, with the goal to draw energy from the AC grid 102 but they are not supposed to regenerate power into the AC grid. In another embodiment, the grid converter 108 is an Active front end type inverter to allow the energy back to the grid in case of a need. In an exemplary embodiment, the electric vehicle that comes for charging is malfunctioning or needs to go to maintenance, then the grid converter 108 transfers the excess energy from the electric vehicle back into the AC grid 102.

In an embodiment, the grid converter 108 includes an isolating transformer, an inverter unit, and a filter for the inverter unit. The transformer's main purpose is to provide galvanic isolation of the drive system. Otherwise the common mode problems are transferred to the AC grid 102. This is undesirable for other consumers in the same grid.

The charging station 110 includes protective fuses, disconnect-switches, a power contactor, a pre-charge circuit, and a discharge circuit. The Pre-charge circuit is needed to bring the ES voltage up from 0VDC and connect it to the DC link without creating an inrush current peak. The Discharge circuit is used only for emergency cases when it's not possible to give energy back to the grid or we need to discharge ES entirely. The charger converter 112 includes a DC-DC converter that pulls energy from the charging station 110 and pushes into the supercapacitor energy storage unit 106 of the electric vehicle 104.

Further, the supercapacitor-based electric vehicle charging system 100 includes a programmable logic control (PLC) unit 114 to control the charger converter 112 and the grid converter 108. In an embodiment, the programmable logic control (PLC) unit 114 works on Profinet communication protocol. Control Area Network (CAN) to Profinet gateways are used in order to exchange information between the devices that provide information over CAN.

A Human Machine Interface (HMI) is linked with PLC, providing user main information and statuses about the grid converter 108, the charger converter 112, the charging station 110 and the electrical vehicle 104. Further, the PLC unit 114 monitors the charging station 110. In an embodiment, the PLC unit 114 monitors current and voltage values at the charging station 110.

In one embodiment, the programmable logic control (PLC) unit monitors load on the AC grid 102 and further controls the grid converter 108 to receive the power supply at off-peak hours to shed load of the AC grid 102. The receiving of load at off-peak hours results in avoiding frequency fluctuations. Further, the off-peak hours allow rapid charge without effecting the power supply of neighborhood.

The supercapacitor-based electric vehicle charging system 100 further includes plurality of protection blocks 118 such as a first protection block 118a, a second protection block 118b, and a third protection block 118c. The first protection block 118a is positioned between the AC grid 102 and the grid converter 108. The second protection block 118b is positioned between the charging station 110, the grid converter 108 and the charger converter 112.

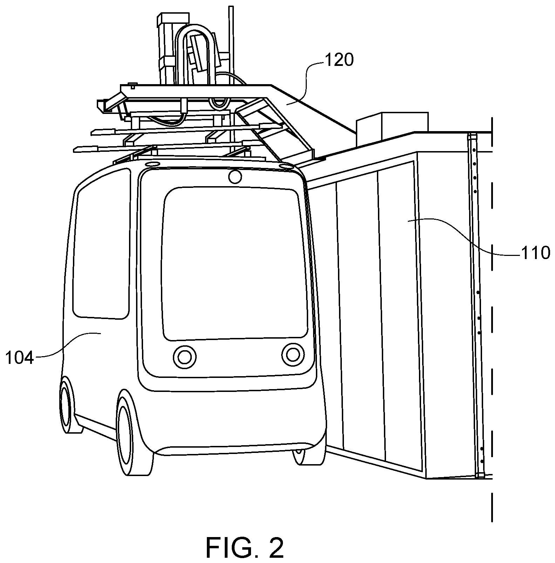

In one embodiment, the supercapacitor-based electric vehicle charging system 100 includes an interface unit 120 to transfer the DC power from the charger converter 112 to the supecapacitor energy storage unit 106 via the programmable logic circuit (PLC) unit 114. In an embodiment, the interface unit 120 is a Pantograph. The interface unit 120 is explained in detailed in conjunction with FIG. 2 of the present invention.

The third protection block 118c is positioned between the charger converter 112 and the interface unit 120. The protection blocks 118 consists of either a residual circuit monitor, a circuit breaker, a fuse or a main switch. The protection blocks 118 protects the components of the charging system 100 from faults coming from the AC grid 102 and vice versa.

In an embodiment, the supercapacitor-based electric vehicle charging system 100 includes a wireless communication unit 116 to communicate electrical parameters of the supercapacitor energy storage unit 106 to the charger converter 112 via the programmable logic control (PLC) unit 114. Examples of the wireless communication unit 116 include but not limited to Wi-Fi, Bluetooth, NFC, WLAN, etc. Examples of the electrical parameters of the supercapacitor energy storage unit 106 include but not limited to state of charge (SoC), state of health (SoH), etc.

In one embodiment, the same voltage value is maintained between the AC grid 102 and the grid converter 108, and the interface unit 120 and the supercapacitor energy storage unit 106. In exemplary embodiment, the AC grid 102 receives 408 VAC at 16A. The voltage level is then converted to 800 VDC by the grid converter 108. The grid converter 108 then further transfers 400 VDC to the interface unit 120. Further, the interface unit 120 transfers 408 VDC to the supercpacitor energy storage unit 106.

FIG. 2 illustrates a perspective view of the interface unit 120 connected to an electric vehicle 104 in accordance with an exemplary embodiment of the present invention. The interface unit 120 is a pantograph which attaches to top portion of the electric vehicle 104. The programmable logic control (PLC) unit (114, shown in FIG. 1) controls the attachment of the electric vehicle 104 to the interface unit 120.

The PLC unit (114, shown in FIG. 1) is able to move the interface unit 120 up and down to adjust the height and for a smooth attachment with the electric vehicle 104. Further, the charging system 100 includes a position sensor to align position of the interface unit 120 with the electric vehicle 104 to provide efficient electrical contact. In an embodiment, the charging station 110 is placed in a separate cabinet.

The present invention offers various advantages such as within a charge time of 30 seconds, a mobility of 7km is achieved. Further, the present invention offers flexibility of drawings the power supply from the AC grid without disturbing frequency. Further, the present invention allows receiving of power supply at off-peak hours.

Many changes, modifications, variations and other uses and applications of the subject invention will, however, become apparent to those skilled in the art after considering this specification and the accompanying drawings which disclose the preferred embodiments thereof. All such changes, modifications, variations and other uses and applications which do not depart from the spirit and scope of the invention are deemed to be covered by the invention, which is to be limited only by the claims which follow.

## Claims

1. A supercapacitor-based electric vehicle charging system to manipulate power supply from an AC grid to an electric vehicle having a supercapacitor energy storage unit, the supercapacitor-based electric vehicle charging system comprising:
a grid converter receives power supply to convert into DC power;
a charging station comprising supercapacitors to receive the DC power from the grid converter,
further the charging station stores the DC power; and
a charger converter to manage the DC power flow to the supercapacitor energy storage unit of the electric vehicle, the charger converter operates at a same voltage value between the AC grid to the supercapacitor energy storage unit to achieve a conversion efficiency of greater than or equal to 90%.

2. The supercapacitor-based electric vehicle charging system according to claim 1, further comprising a programmable logic control (PLC) unit to control the charger converter and the grid converter.

3. The supercapacitor-based electric vehicle charging system according to claim 2, **characterized in that** the programmable logic control (PLC) unit monitors load on the AC grid, further the programmable logic control (PLC) unit controls the grid converter to receive the power supply at off-peak hours to shed load of the AC grid.

4. The supercapacitor-based electric vehicle charging system according to claim 2 or 3, further comprising a wireless communication unit to communicate electrical parameters of the supercapacitor energy storage unit to the charger converter via the programmable logic control (PLC) unit.

5. The supercapacitor-based electric vehicle charging system according to any of the claims 2 to 4, **characterized in that** the programmable logic control (PLC) unit monitors the charging station.

6. The supercapacitor-based electric vehicle charging system according to any of the claims 2 to 5, further comprising an interface unit to transfer the DC power from the charger converter to the supercapacitor energy storage unit via the programmable logic control (PLC) unit.

7. The supercapacitor-based electric vehicle charging system according to claim 6, **characterized in that** the interface unit is a Pantograph.

8. The supercapacitor-based electric vehicle charging system according to any of the preceding claims, further comprising plurality of protection blocks, **characterized in that** a first protection block positioned between the AC grid and the grid converter; and a second protection block positioned between the charging station, the grid converter and the charger converter.

9. The supercapacitor-based electric vehicle charging system according to any of the claims 6 to 8, **characterized in that** the plurality of protection blocks further comprising a third protection block positioned between the charger converter and the interface unit.

10. The supercapacitor-based electric vehicle charging system according to claim 8 or 9, **characterized in that** the protection blocks comprising at least one of a residual circuit monitor; a circuit breaker; a fuse; and a main switch.

11. The supercapacitor-based electric vehicle charging system according to any of the claims 6 to 10**characterized in that** the third protection block comprising at least one of a residual circuit monitor; a circuit breaker; a fuse; and a main switch.

12. The supercapacitor-based electric vehicle charging system according to any of the preceding claims, **characterized in that** the supercapacitors of the charging station comprises multiple series and/or parallel combinations of low internal resistors supercapacitor modules.

13. The supercapacitor-based electric vehicle charging system according to any of the preceding claims, **characterized in that** the charging station operates at a temperature range between -45°C to 120°C.

14. The supercapacitor-based electric vehicle charging system according to any of the claims 6 to 13, **characterized in that** the programmable logic control (PLC) unit controls the attachment of the interface unit with the supercapacitor energy storage unit.

15. The supercapacitor-based electric vehicle charging system according to any of the preceding claims, **characterized in that** the charger converter delivers a minimum charge range of 7km in a charge time of 30 seconds.
